# EUROPÄISCHE PATENTSCHRIFT

(11) **EP 0 594 956 B1**
(45) Veröffentlichungstag und Bekanntmachung des Hinweises auf die Patenterteilung: **28.01.1998**
(21) Anmeldenummer: 93112524.9
(22) Anmeldetag: 05.08.1993
(51) Int. Cl.: B65G 53/56

(54) **Rohrweiche**
Pipe branching
Raccord de tuyau à aiguillage

(30) Priorität: 26.10.1992 DE 4235860
(43) Veröffentlichungstag der Anmeldung: 04.05.1994
(73) Patentinhaber: FILTERWERK MANN & HUMMEL GMBH, D-71631 Ludwigsburg (DE)
(72) Erfinder: Brandauer, Otto, D-75417 Mühlacker (DE); Goth, Gerhard, D-71726 Benningen (DE)
(74) Vertreter: Voth, Gerhard, Dipl.-Ing.

(56) Entgegenhaltungen:
- WO-A-90/01094
- DE-A- 2 436 595
- FR-A- 2 528 017
- US-A- 3 527 252

## Beschreibung

Die Erfindung betrifft eine Vorrichtung zur Verteilung von Stoffströmen in Rohrsystemen.

Derartige Verteiler sind bekannt, z.B. in der Zeitschrift Kunststoffe 80. Jahrgang, Seite 772 bis 775 oder im deutschen Gebrauchsmuster DE-U-18 77 476. Weiter ist eine Vorrichtung zur Verteilung von Stoffströmen in Rohrsystemen aus der WO-A-90/01094 bekannt.

Man könnte nun mehrere Verteiler der im Gebrauchsmuster DE-U-18 77 476 gemäßen Art verbinden, um eine gewisse Anzahl von Verteilungsmöglichkeiten zu erhalten. Dies wäre jedoch umständlich zu steuern, die Lösung würde sehr viel Platz benötigen und entsprechend teuer werden. Nachteilig bei solchen Verteilern sind vor allem auch die langen Rohrwege, die im Falle eines Sortenwechsels evakuiert werden müssen.

Es ist somit Aufgabe der Erfindung, einen Verteiler der eingangs genannten Art dahingehend zu verbessern, daß ein flexibler, leicht zu bedienender, klein bauender, leicht zu reinigender und preisgünstiger Verteiler geschaffen wird.

Erfindungsgemäß wird diese Aufgabe dadurch gelöst, daß wenigstens zwei zueinander parallele und verschiebliche mit wenigstens zwei Durchgangslöchern und/oder Anschlußstutzen versehenen Scheiben vorgesehen sind, wobei an wenigstens zwei dieser verschieblichen Scheiben wenigstens zwei flexible Rohre befestigt sind, wobei mittels relativer Verschiebungen der

Scheiben zueinander unterschiedliche Verbindungen zu erzielen sind und mittels der die Verteilung der Stoffströme stattfindet.

Durch die parallel liegenden Scheiben, die maximal durch eine feststehende Gehäusewandung zwischen den verschieblichen Scheiben beabstandet sind, fällt ein extrem geringes Totvolumen im Falle des Artikelwechsels an, das mit wenig Zeit- und Energieaufwand evakuiert werden kann. Durch die geeignete Auswahl an Scheiben und flexiblen Rohren entsteht ein äußerst flexibles und leistungsfähiges Verteilersystem, das in kurzer Zeit sortenrein Verbindungen zwischen z.B. Materialsilo und Verarbeitungsmaschine herstellen kann.

Vorteilhafte Weiterbildungen der Erfindung ergeben sich aus den Unteransprüchen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombination bei der Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Figur 1: eine Vorderansicht eines Ausführungsbeispiels

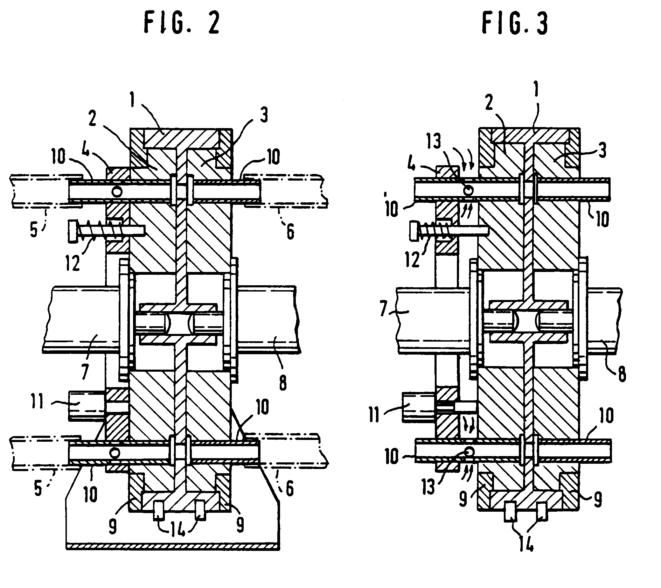

- Figur 2: ein Schnitt durch das in Figur 1 dargestellte Ausführungsbeispiel während der Förderung
- Figur 3: ein Schnitt durch das in Figur 1 dargestellte Ausführungsbeispiel während des Leersaugens zum Zweck des Artikelwechsels

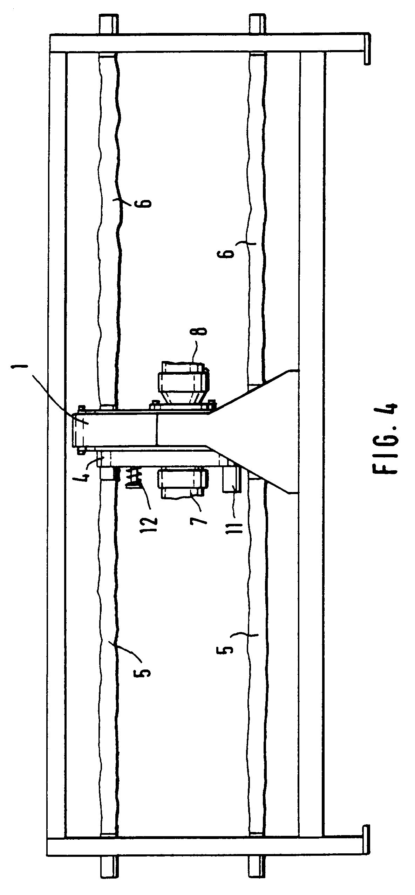

- Figur 4: eine Seitenansicht eines Ausführungsbeispiels

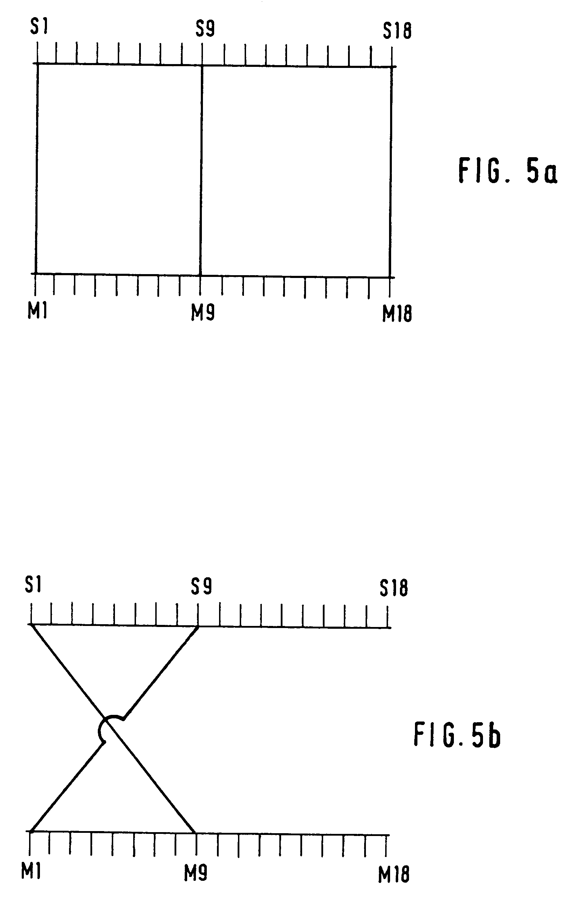

- Figur 5: eine schematische Darstellung der Verbindungen zwischen Maschinen und Silos.

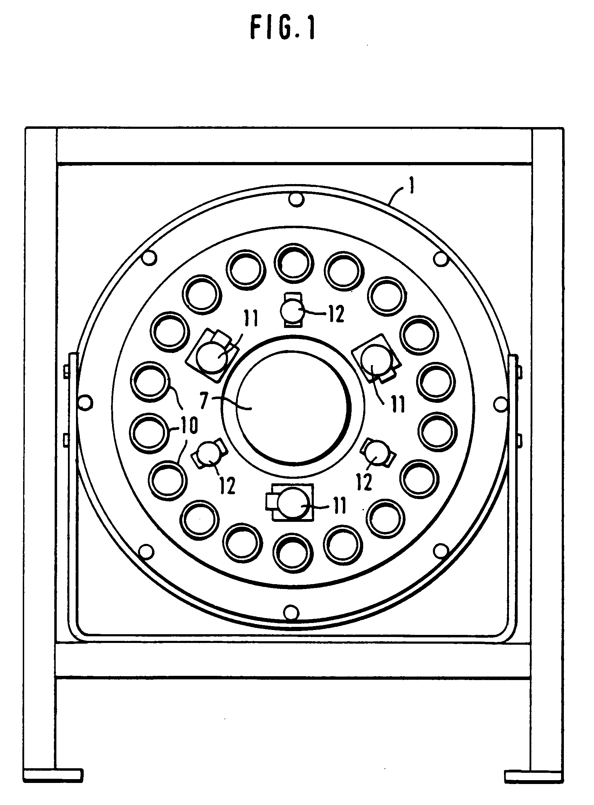

In Figur 1 ist ein Mehrwegverteiler dargestellt. Das Ausführungsbeispiel stellt 18 Siloanschlüsse und 18 Maschinenanschlüsse dar. Im Gehäuse 1 werden die Drehscheiben 2 und 3 gelagert und durch die Dichtscheiben 9 axial fixiert. Die Antriebe 7 und 8 sind an den Drehscheiben 2 und 3 befestigt und treiben diese über das Gehäuse 1 an. Die Motoren sind selbsthemmend ausgeführt, eine exakte Verdrehposition wird elektronisch über Näherungsinitiatoren 14 exakt eingestellt. Der Schlauchanschluß 5 und 6 ist in den Scheiben 2 und 3 mittels drehbarer Stutzen 10 befestigt, um Torsionskräften bei der Verdrehung der Scheiben 2 und 3 entgegenzuwirken. Die Leersaug-Dichtscheibe 4 wird mittels Hubzylinder 11 axial an die Drehscheibe 2 gepreßt und durch Druckfederführungen 12 gehalten. Mit den Hubzylindern 11 kann die Leersaug-Dichtscheibe 4 axial verschoben werden.

Die Drehscheiben 2 und 3 lassen sich, beginnend vom Nullpunkt aus, beispielsweise um 90° in beide Richtungen verdrehen, um so eine Volldrehung und somit unnötige Torsionsbelastungen in den flexiblen Rohren zu vermeiden. In der Grundstellung sind sämtliche Schlauchanschlüsse vom Silo zur Maschine in einer bestimmten Paarung offen. Hierbei kann z.B. eine Saugförderung von Silo S 1 zur Maschine M 1 oder von Silo S 9 zur Maschine M 9 erfolgen. Nach Ende einer Förderung, z.B. von Silo S 1 zur Maschine M 1 werden die Hubzylinder 11 aktiviert, die Leersaug--Dichtscheibe 4 wird axial verschoben, dadurch werden die Leersaugbohrungen 13 geöffnet. Durch diesen Vorgang wird der Materialfluß vom Silo unterbrochen und die Leitung zwischen Leersaugbohrung 13 und Maschine leergesaugt. Wird beispielsweise eine Materialförderpaarung Silo S 1 zur Maschine M 9 gewünscht, verschiebt sich die Drehscheibe 2 um 90° im Uhrzeigersinn und die Drehscheibe 3 um 90° gegen den Uhrzeigersinn. Durch den geringen Totraum, bedingt durch Gehäuse 1 und die mittels Leersaugbohrungen und Leersaugdichtscheibe 4 durchzuführende Evakuierung von Restmaterial, kann so gut wie keine Materialvermischung eintreten.

## Patentansprüche

1. Vorrichtung zur Verteilung von Stoffströmen in Rohrsystemen,
- wobei wenigstens zwei zueinander parallele und bewegliche mit wenigstens zwei Durchgangslöchern und/oder Anschlußstutzen (10) versehene Scheiben (2, 3) vorgesehen sind,
- wobei an wenigstens zwei dieser beweglichen Scheiben wenigstens zwei flexible Rohr (5, 6) befestigt sind,
- wobei mittels relativer Bewegungen der Scheiben zueinander unterschiedliche Verbindungen zu erzielen sind und mittels derer die Verteilung der Stoffströme stattfindet.

2. Vorrichtung nach Anspruch 1, dadurch gekennzeichnet, daß die Verstellelemente der zueinander beweglichen Scheiben pneumatische und/oder elektrische sind.

3. Vorrichtung nach einem oder mehreren der vorgenannten Ansprüche, dadurch gekennzeichnet, daß das Antriebselement ein Stellmotor ist.

4. Vorrichtung nach einem oder mehreren der vorgenannten Ansprüche, dadurch gekennzeichnet, daß zur Koordinatenkontrolle der beweglichen Scheiben wenigstens ein Näherungsinitiator (14) pro beweglicher Scheibe angebracht ist.

5. Vorrichtung nach einem oder mehreren der vorgenannten Ansprüche, dadurch gekennzeichnet, daß die Anschlußstutzen (10) für die flexiblen Rohre (5, 6) an den beweglichen Scheiben (2, 3) beweglich gelagert sind.

6. Vorrichtung nach einem oder mehreren der vorgenannten Ansprüche, dadurch gekennzeichnet, daß die Anschlußstutzen für die flexiblen Rohre an den beweglichen Scheiben gelocht sind.

7. Vorrichtung nach Anspruch 6, dadurch gekennzeichnet, daß eine bewegliche Leersaug-Dichtscheibe (4) während des Verteilvorgangs über dem gelochten Bereich des Anschlußstutzens angebracht ist.

8. Vorrichtung nach Anspruch 6 und 7, dadurch gekennzeichnet, daß die Leersaug-Dichtscheibe für den Zweck des Sortenwechsels vom gelochten Bereich des Anschlußstutzens wegzubewegen ist.

9. Vorrichtung nach einem oder mehreren der vorgenannten Ansprüche, dadurch gekennzeichnet, daß die parallelen Scheiben um eine zentrale Achse drehbar gelagert sind.

10. Vorrichtung nach Anspruch 11, dadurch gekennzeichnet, daß die Bewegung der parallelen Scheiben mittels eines Umlaufgetriebes realisiert ist.

11. Rohrweiche wobei eine Vorrichtung nach einem oder mehreren der vorgenannten Ansprüche zum Einsatz kommt.

## Claims

1. Apparatus developed for distributing material flows in pipe systems
- whereby at least two movable disks (2, 3) which run parallel to each other are provided with at least two through-holes and/or connection branches (10),
- whereby at least two flexible pipes (5, 6) are attached to at least two of said movable disks,
- whereby various connection types can be achieved by relatively moving the disks towards each other and by means of which it is possible to distribute the material flows.

2. Apparatus according to claim 1, characterized in that the disks which are movable towards each other are provided with pneumatic and/or electrical adjusting elements.

3. Apparatus according to at least one of the preceding claims, characterized in that the driving unit is determined to be an actuator.

4. Apparatus according to at least one of the preceding claims, characterized in that each movable disk is provided with at least one proximity initiator (14) in order to control the coordinates of said movable disks.

5. Apparatus according to at least one of the preceding claims, characterized in that the connection branches (10) developed for the flexible pipes (5, 6) are freely supported at the movable disks (2, 3).

6. Apparatus according to at least one of the preceding claims, characterized in that the connection branches (10) developed for the flexible pipes (5, 6) have been punched at the movable disks (2, 3).

7. Apparatus according to claim 6, characterized in that during the distribution process a movable empty suction gasket (4) is fastened over the punched region of the connection branch.

8. Apparatus according to claim 6 and 7, characterized in that it is necessary to move the empty suction gasket away from the punched region of the connection branch, in case it is intended to change the material type.

9. Apparatus according to at least one of the preceding claims, characterized in that the parallel disks are pivoted around one central axis.

10. Apparatus according to claim 9, characterized in that moving the parallel disks is feasible by means of an epicyclic gear.

11. Pipe branching characterized in that an apparatus is used which is developed in accordance with one of the preceding claims.

## Revendications

1. Dispositif de distribution de courants de matières dans des systèmes tubulaires,
caractérisé en ce que
- il est prévu au moins deux disques (2, 3) parallèles et mobiles les uns par rapport aux autres, présentant au moins deux trous de passage et/ou des ajutages de raccordement,
- sur au moins deux de ces disques mobiles sont fixés au moins deux tubes flexibles (6, 6),
- les mouvements relatifs des disques servent à établir entre eux différentes liaisons par lesquelles s'effectue la distribution des courants de matière.

2. Dispositif selon la revendication 1,
caractérisé en ce que
les organes assurant le déplacement des disques mobiles les uns par rapport aux autres, sont pneumatiques ou électriques.

3. Dispositif selon une ou plusieurs des revendications précédentes,
caractérisé en ce que
le moteur d'entraînement est un servomoteur.

4. Dispositif selon une ou plusieurs des revendications précédentes,
caractérisé en ce que
pour contrôler les coordonnées des disques mobiles, chacun d'eux est équipé d'au moins un initiateur de proximité (14).

5. Dispositif selon une ou plusieurs des revendications précédentes,
caractérisé en ce que
les ajutages de raccordement (40) des tubes flexibles (5, 6) sont montés mobiles sur les disques mobiles (2, 3).

6. Dispositif selon une ou plusieurs des revendications précédentes,
caractérisé en ce que
les ajutages de raccordement des tubes flexibles sont percés près des disques mobiles.

7. Dispositif selon la revendication 6,
caractérisé en ce que
un disque (4) joint d'étanchéité pour mise au vide est, pendant l'opération de distribution, placé sur la zone perforée de l'ajutage de raccordement.

8. Dispositif selon une ou plusieurs des revendications 6 et 7,
caractérisé en ce que
le disque d'étanchéité, lorsqu'on veut changer de type de matière, est retiré de la zone perforée de l'ajutage de raccordement.

9. Dispositif selon l'une quelconque des revendications précédentes,
caractérisé en ce que
les disques parallèles peuvent tourner autour d'un axe central.

10. Dispositif selon la revendication 9,
caractérisé en ce que
le mouvement des disques parallèles est réalisé par un engrenage planétaire.

11. Aiguillage tubulaire mettant en oeuvre une ou plusieurs des caractéristiques précédentes.
